Europäisches Patentamt

European Patent Office

Office européen des brevets

(11) Veröffentlichungsnummer: **0 338 579**
A2

(12) # EUROPÄISCHE PATENTANMELDUNG

(21) Anmeldenummer: **89107229.0**

(51) Int. Cl.4: **B65G 65/44**

(22) Anmeldetag: **21.04.89**

(30) Priorität: **22.04.88 HU 204588**

(43) Veröffentlichungstag der Anmeldung:
**25.10.89 Patentblatt 89/43**

(84) Benannte Vertragsstaaten:
**AT BE CH DE ES FR GB GR IT LI LU NL SE**

(71) Anmelder: **Vasipari és Gépjármüjavito
Szövetkezet
Zsidi ut
HU-8361 Keszthely(HU)**

(72) Erfinder: **Farkas, György, Dipl.-Ing.
Kossuth u. 26
H-8316 Várvölgy(HU)**

(74) Vertreter: **Kohlmann, Karl Friedrich, Dipl.-Ing.
et al
Hoffmann, Eitle & Partner Arabellastrasse 4
(Sternhaus)
D-8000 München 81(DE)**

(54) **Rüttelspeiser zum Austragen von Schüttmaterialien verschiedener Konsistenz.**

(57) Die Erfindung bezieht sich auf einen Rüttelspeiser, wobei mindestens ein Teil, bzw. eine Strecke
des Rüttelkörpers (6) durch ein Füllhorn (7) gebildet
ist. Das Austragen des Materials aus dem Lagerbehälter (1) ist durch den Druck des transportierten
Materials durchgeführt, das Rüttelgetriebe (4) hat nur
die Aufgabe, die Reibung zwischen dem transportierten Material und dem Rüttelkörper (6) zu vermindern, seine Energie wird nicht zur Überwindung der
inneren Reibung des transportierten Materials aufgebraucht.

Fig.2

EP 0 338 579 A2

## Rüttelspeiser zum Austragen von Schüttmaterialien verschiedener Konsistenz

Die Erfindung bezieht sich auf einen Rüttelspeiser mit niedrigem Strömungswiderstand zum Austragen von Schüttmaterialien verschiedener Konsistenz - bis zum Einstampfen - aus Lagerbehälter.

Bisher bestand kein Bedürfnis, die mit dem zu transportierenden Material in Berührung kommenden Flächen der Rüttelspeiser derart auszubilden, daß sich das zu transportierende Material jeweils mit geringem Strömungswiderstand im Rüttelspeiser bewegt, weil das durch die Transportgeschwindigkeit nicht begründet war. Die Materialien mit hoher innerer Reibung bzw. die einstampfenden Materialien (wie z.B. Russ, Farbpulver) wurden infolge der Einstampfung meistens als mittels Rüttelung nicht speisbare Materialien angesehen. Die Rüttelspeiser haben das Austragen aus dem Behälter mittels äusserer Energieeinführung durchgeführt, und die potenzielle Energie des transportierten Materials, die im Falle von niedrigem Strömungswiderstand auch in sich selbst zum Austragen genügend ist, wurde durch die innere Reibung, die Reibung der Schichte des transportierten Materials aufeinander aufgezehrt.

In der italienischen Patentanmeldung Nr. 15.430 A/69 ist eine Konstruktion beschrieben, die die Rütteltransportierung von zur Einstampfung geneigten feinkörnigen Stäuben durch Lockerhaltung löst. Die potenzielle Energie des transportierten Materials ist nicht einmal durch diese Konstruktion ausgenützt, und die Steuerung der sicherheitsvollen Funktionierung der zur Lockerhaltung dienenden Elemente würde diese Lösung zu sehr kostspielig machen. In dem Fall, wenn von den die Lockerhaltung beeinflussenden Faktoren sich nur ein Faktor /z.B. Feuchtigkeit, Materialhöhe, Materialwegnahme/ nur für eine kurze Zeit auf ungünstige Weise verändert, wird die Vibration bei den obigen Materialien zur Einstampfung, Stopfenbildung führen, da der rechteckige Materialstrom die Rutschung der inneren Schichte aufeinander wahrscheinlich macht.

Die Zielsetzung der Erfindung ist, einen Rüttelspeiser mit niedrigem Strömungswiderstand zu schaffen, in dem Schüttmaterialien verschiedener Konsistenz - bis zum Einstampfen - einerseits mit minimalem Energieverlust transportiert werden können und andererseits im transportierten Material eine innere Reibung nur in geringem Maß oder überhaupt nicht auftritt, wodurch auch das im Speiser zeitweilig eingestampfte Material ausgetragen werden kann.

Erfindungsgemäß wird dieses Ziel dadurch erreicht, daß mindestens ein Teil bzw. eine Strecke der mit dem transportierten Material kontaktieren Fläche des Rüttelspeisers in geometrischer Hinsicht in Form eines Füllhorns ausgebildet ist.

In dem Fall, dass die ganze Speiserfläche in der Form eines Füllhorns ausgebildet ist, kann auch das im Speiser zeitweilig vollständig eingestampfte, befestigte Material ausgetragen werden.

Bei einem aus Füllhorn-, Kegel- oder Zylinderflächen ausgebildeten Speiser wird das in der Form eines Füllhorns eingestampfte Material durch den Kegel oder Zylinder in Segmente gebrochen. Bei zur Einstampfung nicht oder weniger geneigten Materialien kann der Kegelwinkel des Füllhorns auf Zero reduziert werden, in diesem Fall kommt in erster Reihe der energieersparende Charakter der Erfindung in den Vordergrund, da die Vibration im wesentlichen nur die Reibung zwischen der Arbeitsfläche des Speisers und dem transportierten Material vermindern soll, und die Materialströmung durch den Lagerbehälterdruck gesichert ist.

Die Erfindung wird nachstehend anhand einiger vorteilhaften Ausbildungsformen mit Hilfe der beiliegenden Zeichnung näher erläutert. Es zeigt

Fig. 1 - den über Füllhorn-Arbeitsfläche verfügenden Rüttelspeiser schematisch,

Fig. 2 - den Vibrator mit Füllhorn- und Kegel/Zylinder-Arbeitsfläche schematisch,

Fig. 3 - den Vibrator mit Füllhorn- und Kegel/Zylinder-Arbeitsfläche schematisch, wobei der Kegelwinkel des Füllhorns Zero ist.

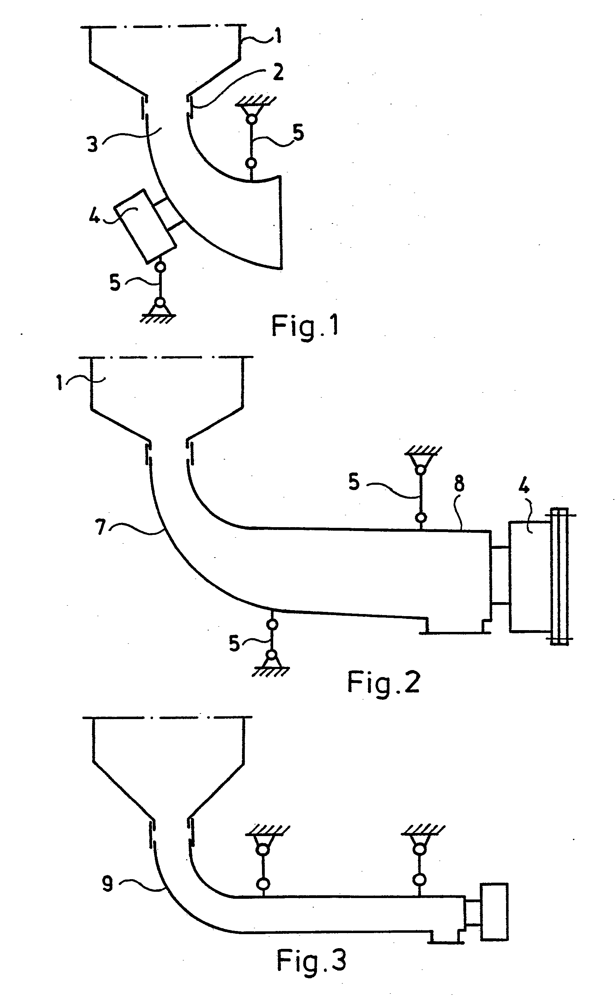

Der Aufbau des Rüttelspeisers laut Fig. 1 ist wie folgt: der Austrittsstutzen des Lagerbehälters 1 ist durch die Gummimuffe 2 am Ende des Füllhorns 3 geringeren Querschnitts angeschlossen. Das Füllhorn 3 und das daran befestigte Rüttelgetriebe 4 sind durch Aufhänge/Unterstützelemente 5 am umgebenden Aufbau angeschlossen. Zur Transportierung von klebenden, haftenden Materialien ist es vorteilhaft, die Innenfläche des Füllhorns 3 mit Teflon zu überziehen. Mit der in Fig. 1 dargestellten Ausführungsform der Erfindung können auch klebende, haftende, zeitweilig einstampfende, befestigende Materialien mit hoher inneren Reibung transportiert werden, weil mittels Betätigung des Rüttelgetriebes 4 sich die Reibung zwischen dem Füllhorn 3 und dem transportierten Material vermindert, und der Lagerbehälterdruck zum Austragen des im Speiser befindlichen Materials genügend ist, weil keine andere, sich aus der inneren Reibung des transportierten Materials ergebenden Verluste auftreten.

Der Rüttelspeiser nach Fig. 2 weicht von demjenigen nach Fig. 1 darin ab, daß der Rüttelkörper 6 durch das Füllhorn 7 und einen Zylinder bzw. Kegel 8 gebildet ist. Unter dem Begriff Füllhorn 3, 7, 9 sind nicht nur solche Konstruktionen zu verstehen, die einen Kreisquerschnitt aufweisen, sondern auch solche mit einem Polygon- oder beliebig anderem Querschnitt.

Mit der in Fig. 2 dargestellten Ausführungsform der Erfindung können Materialien jeder Konsistenz, mit Ausnahme der vollständigen Befestigung, beziehungsweise Fluidisierung geliefert werden.

Die in Fig. 3 dargestellte Ausführungsform ist von derjenigen nach Fig. 2 darin abweichend, daß der Kegelwinkel des Füllhorns 9 Zero ist oder Zero anhält.

Mit dieser Ausführungsform können Materialien dauerhaft lockeren Zustandes (z.B. Korngut) mittels Einführung von geringer Rüttelenergie, grundsätzlich mit der Ausnützung der potenziellen Energie des transportierten Materials transportiert werden.

## Ansprüche

1. Rüttelspeiser mit geringem Strömungswiderstand zum Austragen von Schüttmaterialien verschiedener Konsistenz - bis zum Einstampfen - aus Lagerbehälter,
dadurch gekennzeichnet, daß mindestens ein Teil, bzw. eine Strecke der mit dem transportierten Material in Kontakt kommenden Fläche des Rüttelspeisers in geometrischer Hinsicht die Form eines Füllhorns (3, 7, 9) aufweist.

2. Rüttelspeiser nach Anspruch 1,
dadurch gekennzeichnet, daß die Arbeitsfläche des Füllhorns (3, 7, 9) mit Teflon überzogen ist.

3. Rüttelspeiser nach Anspruch 1 oder 2,
dadurch gekennzeichnet, daß der Kegelwinkel des Füllhorns (9) null ist.

EP 0 338 579 A2

Fig.1

Fig.2

Fig.3